(19)

Europäisches Patentamt

European Patent Office

Office européen des brevets

(11) **EP 2 528 319 A1**

(12) **EUROPEAN PATENT APPLICATION**

(43) Date of publication:
**28.11.2012 Bulletin 2012/48**

(51) Int Cl.:
***H04N 1/64*** (2006.01)

(21) Application number: **11305630.3**

(22) Date of filing: **23.05.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Alcatel Lucent
75007 Paris (FR)**

(72) Inventors:
• **Justen, Pascal
1150 Sint-Pieters-Woluwe (BE)**

• **Aacke, Willem
2820 Bonheiden (BE)**
• **Vermoesen, Luc
2880 Bornem (BE)**

(74) Representative: **ALU Antw Patent Attorneys
Intellectual Property and Standards
Copernicuslaan 50
2018 Antwerp (BE)**

(54) **Image data compressing and decompressing methods and devices**

(57) Method for compressing image data, said method comprising
- receiving said image data in a color space $(R_{ij}, G_{ij}, B_{ij})$
- transforming the individual components $(R_{ij}, G_{ij}, B_{ij})$ of said color space into respective values of chrominance $(U_{ij}, V_{ij})$, and luminance $(Y_{ij})$ components, thereby obtaining transformed image data
- compressing said transformed image data by selecting and re-arranging said transformed image data into a Bayer pattern image.

A method for decompressing as well as devices for compressing and decompressing image data are disclosed as well.

Fig. 1a

input data pixels 11 to 44 in RGB

transformed pixels 11 to 44 in YUV

compressed pixels 11 to 44 in Bayer

EP 2 528 319 A1

## Description

The present invention relates to a method for compressing image pixel data , with the aim to reduce the amount of bits needed to represent them, while at the same time preserving visual quality. The latter aspect means that potential artifacts which result from the compression will be much less perceptible to the human eye, compared to traditional methods..

At present pixels are commonly represented in a RGB color/pixel organization, which generally requires 3 bytes per pixel. RGB is the abbreviation of Red-Green-Blue meaning that one pixel of a digital image is represented by the 8 bit values of a Red component, the 8bit values of a Green component, and the 8 Bit values of a Blue component. A popular RGB pixel/color organization is also the RGBA32 , which is the abbreviation of Red-Green-Blue-Alpha, with Alpha indicating a spare channel for representing the pixel transparency used in composing and blending operations. One pixel of a digital image is then represented by the 8 bit values of a Red component, the 8bit values of a Green component, the 8Bit values of a Blue component, and the 8 bit values of the Alpha component . RGB32 then corresponds to RGBA32, but wherein no use is made of this Alpha component, leaving this space empty.

Methods for adapting the RGBA32 or RGB32 pixel data, for trying to represent this color information in a different way which requires less bits, are for instance filtering methods e.g. the well-known Bayer filtering on the RGBA32 data. While this drastically reduces the amount of required bits by a factor of 4, the color/pixel organization content is seriously reduced as well which may lead to loss in quality. Similarly scaling down of the values from 8 bits to 6 bits or lower, can also reduce the number of bits required. For example RGB16 uses only 6 bits for the green component, and 5 bits for the red and blue component, thus leading to 16 bits per pixel. Note that the green component has 1 bit more resolution than red and blue, because the human eye is more sensitive to nuances of green-alike colors. RGB16 may thus be derived from the RGB32 by means of a downscaling operation.

Also YUV based pixel representations can be obtained from RBGA32 color/pixel organizations by performing well-known transforms. YUV420 for instance will then only require 12 bits per pixel. However this also can lead to quality reduction, visible at high-contrast parts of the image such as e.g. text within an image, sharp lines etc.

It is therefore an object of embodiments of the present invention to present a method and device for adapting the pixel data from a high quality color/pixel organization requiring many bits per pixel, to another color/pixel organization, requiring less bits per pixels, while at the same time still preserving a satisfactory quality.

According to embodiments of the present invention this object is achieved by a method for compressing image data, said method comprising the steps of

- receiving said image data in a color space
- transforming the individual components of said color space into respective values of chrominance and luminance components, thereby obtaining transformed image data
- compressing said transformed image data to thereby obtain compressed image data, said compressing comprises selecting and re-arranging said transformed image data into a Bayer pattern image.

In contrast to more traditional ways of compressing data, by performing the Bayer operation directly on RGB instead of on the YUV , more information of the original pixel data is now preserved. Indeed, the information content of the Y-component, is higher than that of each of the individual R, G or B components, such that a first transform from RGB to YUV, followed by a compressing step by means of a Bayer filtering, better preserves the information content, and thus the quality, of the original image data. Moreover, due to the fact that the luminance values are typically higher than the individual R,G, B values, using these values for further calculation, during a decompression step, will also lead to less errors.

The present invention relates as well to embodiments of a method for decompressing image data, said method comprising

- receiving said image data under a compressed Bayer form of chrominance and luminance components,
- expanding said Bayer pattern image and reconstructing individual respective values of chrominance and luminance components based on said Bayer image data of chrominance and luminance components,
- transforming said reconstructed respective values of chrominance and luminance components into corresponding values of a color space .

The present invention relates as well to embodiments of a device for compressing image data, said device being adapted to receive said image data in a color space to transform the individual components of said color space into respective values of chrominance and luminance components, thereby obtaining transformed image data, and to compress said transformed image data by selecting and re-arranging said transformed image data into a Bayer pattern image.

The present invention relates also to embodiments of a device for decompressing image data , said device being adapted to receive said image data under a compressed Bayer form of chrominance and luminance components, to expanding said Bayer pattern image and to reconstruct individual respective values of chrominance and luminance components based on said Bayer image data of chrominance and luminance components, and to transform said reconstructed respective values of chrominance and luminance components into corresponding values of a color space.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein:

Figs. 1a,2a,3a show schematic representations of embodiments of the method for compressing image data

Figs. 1b,2b,3b show schematic representations of embodiments of the method for decompressing image data

Fig. 4 shows an embodiment of a method for transferring image data over a limited bandwidth bus, comprising embodiments of the method for compressing and decompressing image data,

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

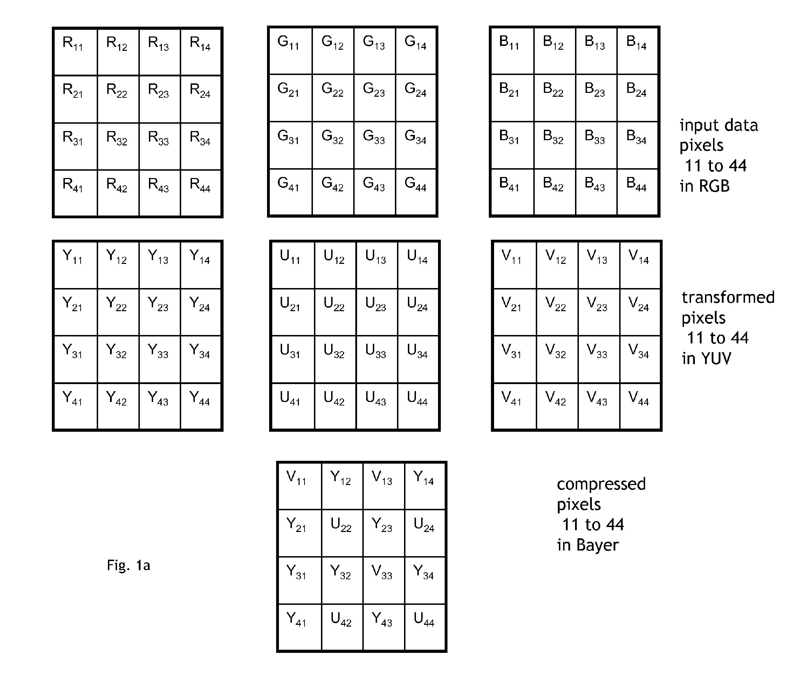

Fig 1a schematically shows the processing steps performed by a first embodiment of the method. In this embodiment an image comprising 16 pixels, denoted with their matrix notation from 11 to 44, meaning a pixel on row1, column 1, to a pixel on row 4 to column4. These pixel data are provided by means of their separate components of a color space, in this case the Red, Green and Blue components of a 3 color space, thus by means of 3 monochrome arrays of pixel values. These are represented by the 3 matrices with elements $R_{ij}$ for the red pixel values, $G_{ij}$ for the green pixel values, and $B_{ij}$ for the blue pixel values. The input configuration shown on this figure is also known as planar RGB. In other embodiments, input values pertaining to another color space such as the CMYW, meaning the cyan, magenta, yellow and white color space can be provided, or of the RGBW, meaning Red Green Blue White color space can be provided etc

In a first step, these individual monochrome pixel values are transformed to their corresponding luminance and chrominance values. The luminance values are represented by $Y_{ij}$, and the chrominance is represented by values of a first chrominance component, denoted $U_{ij}$, and of a second chrominance component, denoted $V_{ij}$. Methods for transforming the values of red-green-blue pixel values into corresponding values of luminance Y and chrominance U and V are known to a person skilled in the art, and are for instance in accordance to the following equations :

YUV can be computed from RGB as follows:

$$Y = W_R R + W_B G + W_B B$$

$$U = U_{max}(B-Y)/(1-W_B)$$

$$Y = V_{max}(R-Y)/(1-W_R)$$

Out of the following constants:

$$W_R = 0.299$$

$$W_B = 0.114$$

$$W_G = 0.587$$

$$U_{max} = 0.436$$

$$V_{Rmx} = 0.615$$

$$y_{11} = 1/2 \, (Y_{12} + Y_{21})$$

As is well known and described in the art.

It is to be remarked that in other embodiments, where other components of a color space are used as input, e.g. cyan, magenta, yellow , white, other transforming equations have to be used for calculating the corresponding luminance and chrominance values.

The respective corresponding luminance values are shown in the pattern comprising Y values from $Y_{11}$ to $Y_{i44}$. Similarly U and V chrominance values for all 16 pixels are also denoted in the other shown arrays.

These three arrays, one for the luminance values, and two for the chrominance values, will next undergo a Bayer filter operation. This means that only one value Y, U or V of the Y, U and V matrix, is selected to populate a corresponding row and column of a single Bayer YUV matrix. This selection is in accordance to the principles as described by Bayer in his patent US 3971065, as is well known to a person skilled in the art.

As this filtering operation also reduces the amount of data to represent one pixel, by representing each pixel Pij by only one of the values of $Y_{ij}$ , $U_{ij}$ or $V_{ij}$ , it is easy to understand that this can be seen as a compressing step, reducing the amount of pixel data with a factor of 3.

In contrast to more traditional ways of compressing data, by performing the Bayer operation directly on RGB instead of on the YUV , more information of the original pixel data is now preserved. Indeed, the information content of the Y-component, is higher than that of each of the individual R, G or B components, such that a first transform from RGB to YUV, followed by a compressing step by means of a Bayer filtering, better preserves the information content, and thus the quality, of the original image data. Moreover, due to the fact that the luminance values are typically higher than the individual R,G, B values, using these values for further calculation, during a decompression step, will also lead to less errors.

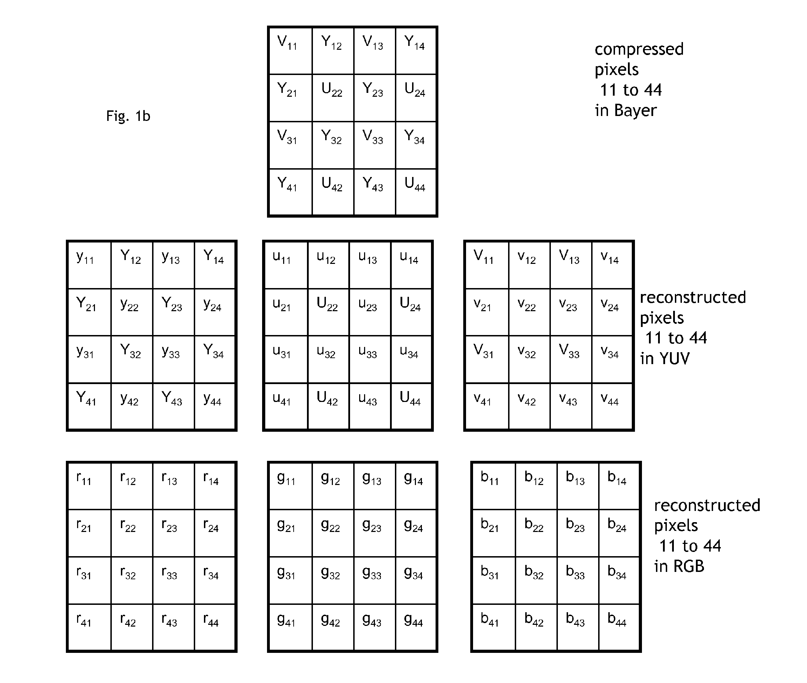

An embodiment for the decompression method is shown in Fig. 1b. This embodiment uses as input a Bayer pattern of luminance and chrominance values. In a next step a reconstruction of the original elements of the Y, U, V matrix is performed. As only some of the matrix elements of the Bayer can be readily used and copied to the Y, U or V matrix, an approximation for the other elements has to take place. In Fig. 1b, these correct values of the individual elements are denoted by means of large caps $Y_{ij}$ $U_{ij}$ or $V_{ij}$, while the approximated values are indicated by means of small caps $y_{ij}$ $U_{ij}$ or $V_{ij}$ . These values are thus approximations, and are for instance obtained by averaging two neighboring elements e.g.

Of course other approximations are possible such as interpolation or resampling methods, e.g. nearest-neighbor interpolation, bilinear interpolation, bicubic interpolation, spline interpolation, Lanczos resampling, etc.

Based on the thus reconstructed values of the Y, U and V pixel array, a transform to the corresponding R,G,B or other color space is performed. As again these lead to approximations , the reconstructed values are all indicated by means of small caps r,g,b.

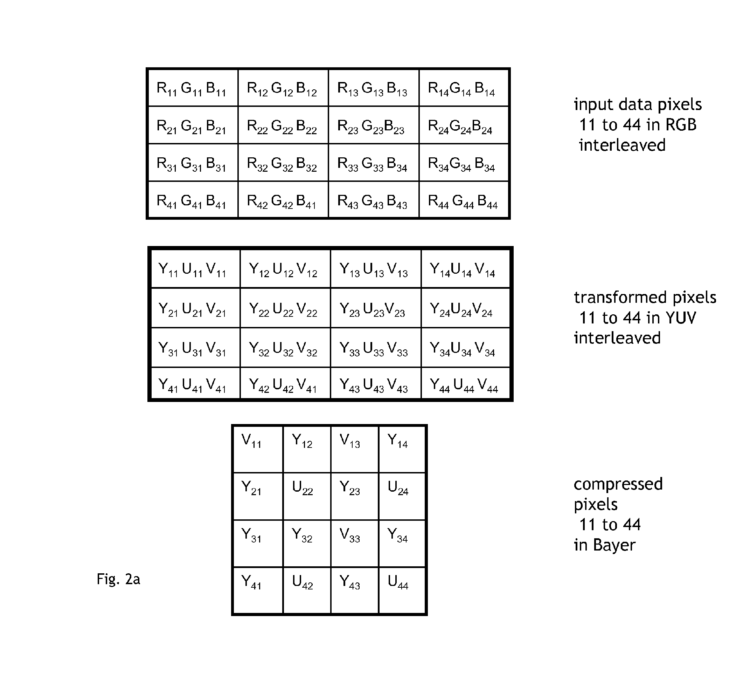

Figs 2a-b show other embodiments of a method for compressing, respectively decompressing image data. In contrast to the embodiment of Fig. 1, the data are provided in an interleaved or packed color/pixel organization. This means that the image data is again provided as only one array of 4x4 elements, but each element of the matrix comprises a concatenation of the individual R, G and B values. The operations performed on these values are similar as these explained in fig. 1a, and the decompressing steps starting from the Bayer pattern is also similar as the one explained in Fig. 1 b.

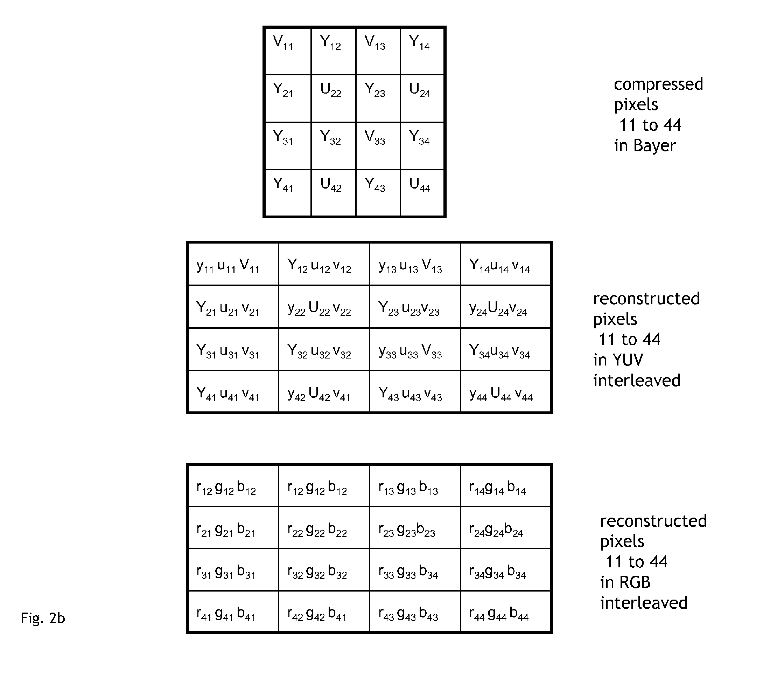

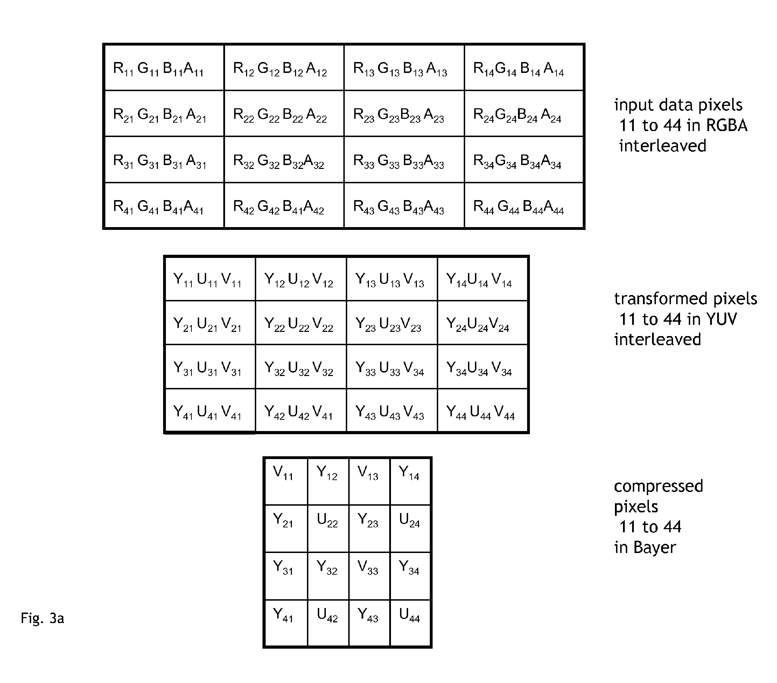

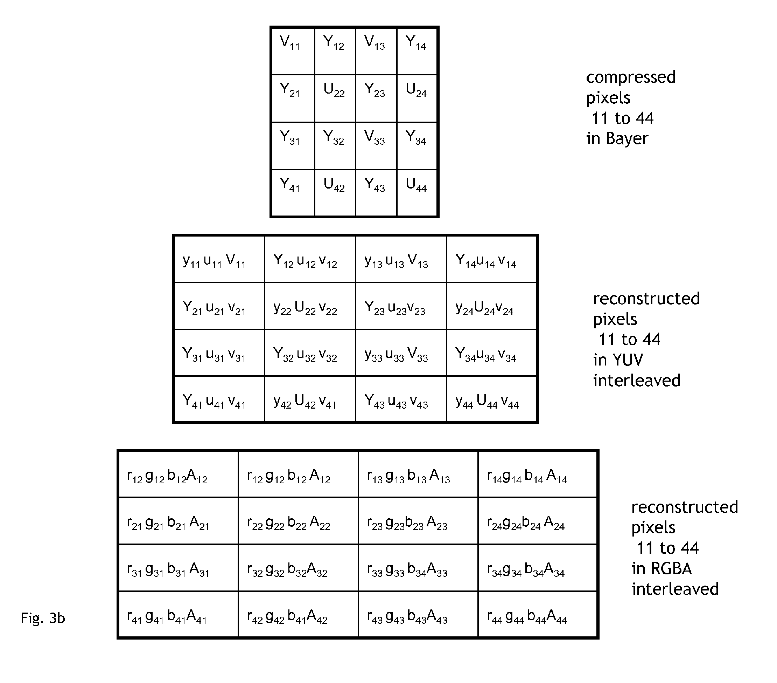

Figs 3a-b show another embodiment, similar to that of Fig. 2a-b, but here the data are provided as RGBA, with the A referring to a spare byte. This spare byte is eliminated during the compression step, and only the R, G,B values are transformed into corresponding Y,U,V data, on which again a Bayer filtering operation will take place. During the decompression, similar steps as with respect to Fig. 2b, are performed, only at the last step , during the reconstruction of the reconstructed RGBA interleaved matrix, spare A values are added in a 4:1 compression ratio.

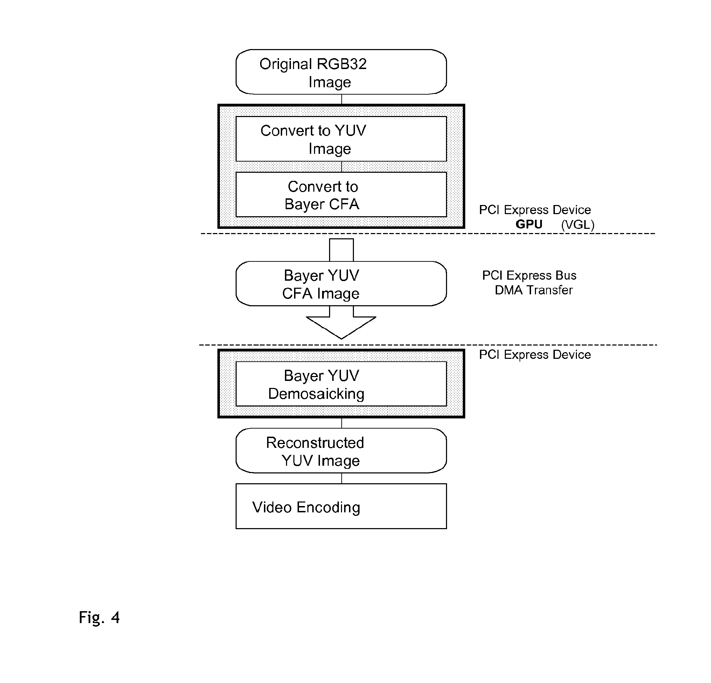

Fig. 4 shows a typical situation where these embodiments for compression/decompression image data can be used. In file transfer operations, using a transfer bus with a limited bandwidth, it can be useful to first compress the data, as explained with respect to the previous embodiments. The compressed data are then transferred over this bus, and a decompression step takes place, to put the data back into the right color/pixel organization for encoding, e.g. JPEG or MPEG encoding, on either individual images or on a sequence constituting a video..

While the principles of the invention have been described above in connection with specific apparatus, it is to be clearly understood that this description is made only by way of example and not as a limitation on the scope of the invention, as defined in the appended claims.

**Claims**

**1.** Method for compressing image data, said method comprising

- receiving said image data in a color space ($R_{ij}$, $G_{ij}$, $B_{ij}$)
- transforming the individual components ($R_{ij}$, $G_{ij}$, $B_{ij}$) of said color space into respective values of chrominance ($U_{ij}$, $V_{ij}$,), and luminance ($Y_{ij}$) components, thereby obtaining transformed image data
- compressing said transformed image data by selecting and re-arranging said transformed image data into a Bayer pattern image.

2. Method for decompressing image data, said method comprising

- receiving said image data under a compressed Bayer form of chrominance and luminance components,
- expanding said Bayer pattern image and reconstructing individual respective values of chrominance ($U_{ij}$, $V_{ij}$,) and luminance ($Y_{ij}$) components based on said Bayer image data of chrominance and luminance components,
- transforming said reconstructed respective values of chrominance and luminance components into corresponding values of a color space ($R_{ij}$, $G_{ij}$, $B_{ij}$).

3. Device for compressing image data, said device being adapted to receive said image data in a color space ($R_{ij}$, $G_{ij}$, $B_{ij}$), to transform the individual components ($R_{ij}$, $G_{ij}$, $B_{ij}$) of said color space into respective values of chrominance ($U_{ij}$, $V_{ij}$,), and luminance ($Y_{ij}$) components, thereby obtaining transformed image data, and to compress said transformed image data by selecting and re-arranging said transformed image data into a Bayer pattern image.

4. Device for decompressing image data , said device being adapted to receive said image data under a compressed Bayer form of chrominance and luminance components, to expanding said Bayer pattern image and to reconstruct individual respective values of chrominance ($U_{ij}$, $V_{ij}$,) and luminance ($Y_{ij}$) components based on said Bayer image data of chrominance and luminance components, and to transform said reconstructed respective values of chrominance and luminance components into corresponding values of a color space ($R_{ij}$, $G_{ij}$, $B_{ij}$).

input data
pixels
11 to 44
in RGB

transformed
pixels
11 to 44
in YUV

compressed
pixels
11 to 44
in Bayer

| B₁₁ | B₁₂ | B₁₃ | B₁₄ |
| B₂₁ | B₂₂ | B₂₃ | B₂₄ |
| B₃₁ | B₃₂ | B₃₃ | B₃₄ |
| B₄₁ | B₄₂ | B₄₃ | B₄₄ |

| V₁₁ | V₁₂ | V₁₃ | V₁₄ |
| V₂₁ | V₂₂ | V₂₃ | V₂₄ |
| V₃₁ | V₃₂ | V₃₃ | V₃₄ |
| V₄₁ | V₄₂ | V₄₃ | V₄₄ |

| G₁₁ | G₁₂ | G₁₃ | G₁₄ |
| G₂₁ | G₂₂ | G₂₃ | G₂₄ |
| G₃₁ | G₃₂ | G₃₃ | G₃₄ |
| G₄₁ | G₄₂ | G₄₃ | G₄₄ |

| U₁₁ | U₁₂ | U₁₃ | U₁₄ |
| U₂₁ | U₂₂ | U₂₃ | U₂₄ |
| U₃₁ | U₃₂ | U₃₃ | U₃₄ |
| U₄₁ | U₄₂ | U₄₃ | U₄₄ |

| V₁₁ | Y₁₂ | V₁₃ | Y₁₄ |
| Y₂₁ | U₂₂ | Y₂₃ | U₂₄ |
| Y₃₁ | Y₃₂ | V₃₃ | Y₃₄ |
| Y₄₁ | U₄₂ | Y₄₃ | U₄₄ |

| R₁₁ | R₁₂ | R₁₃ | R₁₄ |
| R₂₁ | R₂₂ | R₂₃ | R₂₄ |
| R₃₁ | R₃₂ | R₃₃ | R₃₄ |
| R₄₁ | R₄₂ | R₄₃ | R₄₄ |

| Y₁₁ | Y₁₂ | Y₁₃ | Y₁₄ |
| Y₂₁ | Y₂₂ | Y₂₃ | Y₂₄ |
| Y₃₁ | Y₃₂ | Y₃₃ | Y₃₄ |
| Y₄₁ | Y₄₂ | Y₄₃ | Y₄₄ |

Fig. 1a

Fig. 1b

| | | | |
|---|---|---|---|
| $V_{11}$ | $Y_{12}$ | $V_{13}$ | $Y_{14}$ |
| $Y_{21}$ | $U_{22}$ | $Y_{23}$ | $U_{24}$ |
| $V_{31}$ | $Y_{32}$ | $V_{33}$ | $Y_{34}$ |
| $Y_{41}$ | $U_{42}$ | $Y_{43}$ | $U_{44}$ |

compressed
pixels
11 to 44
in Bayer

| | | | |
|---|---|---|---|
| $y_{11}$ | $Y_{12}$ | $y_{13}$ | $Y_{14}$ |
| $Y_{21}$ | $y_{22}$ | $Y_{23}$ | $y_{24}$ |
| $y_{31}$ | $Y_{32}$ | $y_{33}$ | $Y_{34}$ |
| $Y_{41}$ | $y_{42}$ | $Y_{43}$ | $y_{44}$ |

| | | | |
|---|---|---|---|
| $u_{11}$ | $u_{12}$ | $u_{13}$ | $u_{14}$ |
| $u_{21}$ | $U_{22}$ | $u_{23}$ | $U_{24}$ |
| $u_{31}$ | $u_{32}$ | $u_{33}$ | $u_{34}$ |
| $u_{41}$ | $U_{42}$ | $u_{43}$ | $U_{44}$ |

| | | | |
|---|---|---|---|
| $V_{11}$ | $v_{12}$ | $V_{13}$ | $v_{14}$ |
| $v_{21}$ | $v_{22}$ | $v_{23}$ | $v_{24}$ |
| $V_{31}$ | $v_{32}$ | $V_{33}$ | $v_{34}$ |
| $v_{41}$ | $v_{42}$ | $v_{43}$ | $v_{44}$ |

reconstructed
pixels
11 to 44
in YUV

| | | | |
|---|---|---|---|
| $r_{11}$ | $r_{12}$ | $r_{13}$ | $r_{14}$ |
| $r_{21}$ | $r_{22}$ | $r_{23}$ | $r_{24}$ |
| $r_{31}$ | $r_{32}$ | $r_{33}$ | $r_{34}$ |
| $r_{41}$ | $r_{42}$ | $r_{43}$ | $r_{44}$ |

| | | | |
|---|---|---|---|
| $g_{11}$ | $g_{12}$ | $g_{13}$ | $g_{14}$ |
| $g_{21}$ | $g_{22}$ | $g_{23}$ | $g_{24}$ |
| $g_{31}$ | $g_{32}$ | $g_{33}$ | $g_{34}$ |
| $g_{41}$ | $g_{42}$ | $g_{43}$ | $g_{44}$ |

| | | | |
|---|---|---|---|
| $b_{11}$ | $b_{12}$ | $b_{13}$ | $b_{14}$ |
| $b_{21}$ | $b_{22}$ | $b_{23}$ | $b_{24}$ |
| $b_{31}$ | $b_{32}$ | $b_{33}$ | $b_{34}$ |
| $b_{41}$ | $b_{42}$ | $b_{43}$ | $b_{44}$ |

reconstructed
pixels
11 to 44
in RGB

EP 2 528 319 A1

| | | | |
|---|---|---|---|
| $R_{11}\,G_{11}\,B_{11}$ | $R_{12}\,G_{12}\,B_{12}$ | $R_{13}\,G_{13}\,B_{13}$ | $R_{14}G_{14}\,B_{14}$ |
| $R_{21}\,G_{21}\,B_{21}$ | $R_{22}\,G_{22}\,B_{22}$ | $R_{23}\,G_{23}B_{23}$ | $R_{24}G_{24}B_{24}$ |
| $R_{31}\,G_{31}\,B_{31}$ | $R_{32}\,G_{32}\,B_{32}$ | $R_{33}\,G_{33}\,B_{34}$ | $R_{34}G_{34}\,B_{34}$ |
| $R_{41}\,G_{41}\,B_{41}$ | $R_{42}\,G_{42}\,B_{41}$ | $R_{43}\,G_{43}\,B_{43}$ | $R_{44}\,G_{44}\,B_{44}$ |

input data pixels
11 to 44 in RGB
interleaved

| | | | |
|---|---|---|---|
| $Y_{11}\,U_{11}\,V_{11}$ | $Y_{12}\,U_{12}\,V_{12}$ | $Y_{13}\,U_{13}\,V_{13}$ | $Y_{14}U_{14}\,V_{14}$ |
| $Y_{21}\,U_{21}\,V_{21}$ | $Y_{22}\,U_{22}\,V_{22}$ | $Y_{23}\,U_{23}V_{23}$ | $Y_{24}U_{24}V_{24}$ |
| $Y_{31}\,U_{31}\,V_{31}$ | $Y_{32}\,U_{32}\,V_{32}$ | $Y_{33}\,U_{33}\,V_{33}$ | $Y_{34}U_{34}\,V_{34}$ |
| $Y_{41}\,U_{41}\,V_{41}$ | $Y_{42}\,U_{42}\,V_{41}$ | $Y_{43}\,U_{43}\,V_{43}$ | $Y_{44}\,U_{44}\,V_{44}$ |

transformed pixels
11 to 44 in YUV
interleaved

| | | | |
|---|---|---|---|
| $V_{11}$ | $Y_{12}$ | $V_{13}$ | $Y_{14}$ |
| $Y_{21}$ | $U_{22}$ | $Y_{23}$ | $U_{24}$ |
| $Y_{31}$ | $Y_{32}$ | $V_{33}$ | $Y_{34}$ |
| $Y_{41}$ | $U_{42}$ | $Y_{43}$ | $U_{44}$ |

compressed
pixels
11 to 44
in Bayer

Fig. 2a

| $V_{11}$ | $Y_{12}$ | $V_{13}$ | $Y_{14}$ |
|---|---|---|---|
| $Y_{21}$ | $U_{22}$ | $Y_{23}$ | $U_{24}$ |
| $Y_{31}$ | $Y_{32}$ | $V_{33}$ | $Y_{34}$ |
| $Y_{41}$ | $U_{42}$ | $Y_{43}$ | $U_{44}$ |

compressed
pixels
11 to 44
in Bayer

| $y_{11}u_{11}V_{11}$ | $Y_{12}u_{12}v_{12}$ | $y_{13}u_{13}V_{13}$ | $Y_{14}u_{14}v_{14}$ |
|---|---|---|---|
| $Y_{21}u_{21}v_{21}$ | $y_{22}U_{22}v_{22}$ | $Y_{23}u_{23}v_{23}$ | $y_{24}U_{24}v_{24}$ |
| $Y_{31}u_{31}v_{31}$ | $Y_{32}u_{32}v_{32}$ | $y_{33}u_{33}V_{33}$ | $Y_{34}u_{34}v_{34}$ |
| $Y_{41}u_{41}v_{41}$ | $y_{42}U_{42}v_{41}$ | $Y_{43}u_{43}v_{43}$ | $y_{44}U_{44}v_{44}$ |

reconstructed
pixels
11 to 44
in YUV
interleaved

| $r_{12}g_{12}b_{12}$ | $r_{12}g_{12}b_{12}$ | $r_{13}g_{13}b_{13}$ | $r_{14}g_{14}b_{14}$ |
|---|---|---|---|
| $r_{21}g_{21}b_{21}$ | $r_{22}g_{22}b_{22}$ | $r_{23}g_{23}b_{23}$ | $r_{24}g_{24}b_{24}$ |
| $r_{31}g_{31}b_{31}$ | $r_{32}g_{32}b_{32}$ | $r_{33}g_{33}b_{34}$ | $r_{34}g_{34}b_{34}$ |
| $r_{41}g_{41}b_{41}$ | $r_{42}g_{42}b_{41}$ | $r_{43}g_{43}b_{43}$ | $r_{44}g_{44}b_{44}$ |

reconstructed
pixels
11 to 44
in RGB
interleaved

Fig. 2b

EP 2 528 319 A1

| $R_{11}G_{11}B_{11}A_{11}$ | $R_{12}G_{12}B_{12}A_{12}$ | $R_{13}G_{13}B_{13}A_{13}$ | $R_{14}G_{14}B_{14}A_{14}$ |
|---|---|---|---|
| $R_{21}G_{21}B_{21}A_{21}$ | $R_{22}G_{22}B_{22}A_{22}$ | $R_{23}G_{23}B_{23}A_{23}$ | $R_{24}G_{24}B_{24}A_{24}$ |
| $R_{31}G_{31}B_{31}A_{31}$ | $R_{32}G_{32}B_{32}A_{32}$ | $R_{33}G_{33}B_{33}A_{33}$ | $R_{34}G_{34}B_{34}A_{34}$ |
| $R_{41}G_{41}B_{41}A_{41}$ | $R_{42}G_{42}B_{41}A_{42}$ | $R_{43}G_{43}B_{43}A_{43}$ | $R_{44}G_{44}B_{44}A_{44}$ |

input data pixels
11 to 44 in RGBA
interleaved

| $Y_{11}U_{11}V_{11}$ | $Y_{12}U_{12}V_{12}$ | $Y_{13}U_{13}V_{13}$ | $Y_{14}U_{14}V_{14}$ |
|---|---|---|---|
| $Y_{21}U_{21}V_{21}$ | $Y_{22}U_{22}V_{22}$ | $Y_{23}U_{23}V_{23}$ | $Y_{24}U_{24}V_{24}$ |
| $Y_{31}U_{31}V_{31}$ | $Y_{32}U_{32}V_{32}$ | $Y_{33}U_{33}V_{34}$ | $Y_{34}U_{34}V_{34}$ |
| $Y_{41}U_{41}V_{41}$ | $Y_{42}U_{42}V_{41}$ | $Y_{43}U_{43}V_{43}$ | $Y_{44}U_{44}V_{44}$ |

transformed pixels
11 to 44 in YUV
interleaved

| $V_{11}$ | $Y_{12}$ | $V_{13}$ | $Y_{14}$ |
|---|---|---|---|
| $Y_{21}$ | $U_{22}$ | $Y_{23}$ | $U_{24}$ |
| $Y_{31}$ | $Y_{32}$ | $V_{33}$ | $Y_{34}$ |
| $Y_{41}$ | $U_{42}$ | $Y_{43}$ | $U_{44}$ |

compressed
pixels
11 to 44
in Bayer

Fig. 3a

| $V_{11}$ | $Y_{12}$ | $V_{13}$ | $Y_{14}$ |
|---|---|---|---|
| $Y_{21}$ | $U_{22}$ | $Y_{23}$ | $U_{24}$ |
| $Y_{31}$ | $Y_{32}$ | $V_{33}$ | $Y_{34}$ |
| $Y_{41}$ | $U_{42}$ | $Y_{43}$ | $U_{44}$ |

compressed
pixels
11 to 44
in Bayer

| $y_{11} u_{11} V_{11}$ | $Y_{12} u_{12} v_{12}$ | $y_{13} u_{13} V_{13}$ | $Y_{14} u_{14} v_{14}$ |
|---|---|---|---|
| $Y_{21} u_{21} v_{21}$ | $y_{22} U_{22} v_{22}$ | $Y_{23} u_{23} v_{23}$ | $y_{24} U_{24} v_{24}$ |
| $Y_{31} u_{31} v_{31}$ | $Y_{32} u_{32} v_{32}$ | $y_{33} u_{33} V_{33}$ | $Y_{34} u_{34} v_{34}$ |
| $Y_{41} u_{41} v_{41}$ | $y_{42} U_{42} v_{41}$ | $Y_{43} u_{43} v_{43}$ | $y_{44} U_{44} v_{44}$ |

reconstructed
pixels
11 to 44
in YUV
interleaved

| $r_{12} g_{12} b_{12} A_{12}$ | $r_{12} g_{12} b_{12} A_{12}$ | $r_{13} g_{13} b_{13} A_{13}$ | $r_{14} g_{14} b_{14} A_{14}$ |
|---|---|---|---|
| $r_{21} g_{21} b_{21} A_{21}$ | $r_{22} g_{22} b_{22} A_{22}$ | $r_{23} g_{23} b_{23} A_{23}$ | $r_{24} g_{24} b_{24} A_{24}$ |
| $r_{31} g_{31} b_{31} A_{31}$ | $r_{32} g_{32} b_{32} A_{32}$ | $r_{33} g_{33} b_{34} A_{33}$ | $r_{34} g_{34} b_{34} A_{34}$ |
| $r_{41} g_{41} b_{41} A_{41}$ | $r_{42} g_{42} b_{41} A_{42}$ | $r_{43} g_{43} b_{43} A_{43}$ | $r_{44} g_{44} b_{44} A_{44}$ |

reconstructed
pixels
11 to 44
in RGBA
interleaved

Fig. 3b

EP 2 528 319 A1

```
┌─────────────────────────┐
│     Original RGB32       │
│         Image           │
└─────────────────────────┘
╔═════════════════════════╗
║ ┌─────────────────────┐ ║
║ │   Convert to YUV    │ ║
║ │       Image         │ ║
║ └─────────────────────┘ ║      PCI Express Device
║ ┌─────────────────────┐ ║         GPU   (VGL)
║ │    Convert to       │ ║
║ │    Bayer CFA        │ ║
║ └─────────────────────┘ ║
╚═════════════════════════╝

┌─────────────────────────┐
│      Bayer YUV          │          PCI Express Bus
│      CFA Image          │          DMA Transfer
└─────────────────────────┘

╔═════════════════════════╗      PCI Express Device
║ ┌─────────────────────┐ ║
║ │     Bayer YUV       │ ║
║ │   Demosaicking      │ ║
║ └─────────────────────┘ ║
╚═════════════════════════╝
┌─────────────────────────┐
│    Reconstructed        │
│     YUV Image           │
└─────────────────────────┘
┌─────────────────────────┐
│    Video Encoding       │
└─────────────────────────┘
```

Fig. 4

EP 2 528 319 A1

Europäisches
Patentamt

European
Patent Office

Office européen
des brevets

# EUROPEAN SEARCH REPORT

Application Number

EP 11 30 5630

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/174811 A1 (SUNG CHIH-TA STAR [DE] ET AL) 9 July 2009 (2009-07-09) * abstract * * figures 1, 5-8 * * paragraphs [0025], [0029] - [0039] * | 1-4 | INV. H04N1/64 |
| X | US 2007/127095 A1 (SUGIMORI MASAMI [JP]) 7 June 2007 (2007-06-07) | 1,3 | |
| A | * abstract; figures 4,5 * * paragraphs [0046] - [0049], [0062] * | 2,4 | |
| A | US 7 194 129 B1 (REINHART CRAIG C [US]) 20 March 2007 (2007-03-20) * abstract * * column 6, line 35 - line 48; figure 4 * * column 7, line 44 - line 59 * | 1-4 | |
| A | US 3 971 065 A (BAYER BRYCE E) 20 July 1976 (1976-07-20) * the whole document * | 1-4 | |
| A | EP 1 575 262 A1 (NOKIA CORP [FI]) 14 September 2005 (2005-09-14) * abstract * * paragraphs [0027] - [0029], [0035], [0043] - [0045] * | 1-4 | TECHNICAL FIELDS SEARCHED (IPC) H04N |
| A | US 2005/212933 A1 (MIYANOHARA MAKOTO [JP]) 29 September 2005 (2005-09-29) * abstract; figures 3-7 * * paragraphs [0049], [0063] * | 1-4 | |

The present search report has been drawn up for all claims

| Place of search | Date of completion of the search | Examiner |
|---|---|---|
| The Hague | 26 August 2011 | Beugin, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 11 30 5630

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2011

| Patent document cited in search report | | Publication date | Patent family member(s) | | Publication date |
|---|---|---|---|---|---|
| US 2009174811 | A1 | 09-07-2009 | NONE | | |
| US 2007127095 | A1 | 07-06-2007 | JP | 2007158509 A | 21-06-2007 |
| US 7194129 | B1 | 20-03-2007 | NONE | | |
| US 3971065 | A | 20-07-1976 | AU | 502623 B2 | 02-08-1979 |
| | | | AU | 1166176 A | 08-09-1977 |
| | | | BE | 839269 A1 | 06-09-1976 |
| | | | CA | 1044301 A1 | 12-12-1978 |
| | | | CH | 608307 A5 | 29-12-1978 |
| | | | DE | 2608998 A1 | 16-09-1976 |
| | | | FR | 2303373 A1 | 01-10-1976 |
| | | | GB | 1527918 A | 11-10-1978 |
| | | | HK | 41882 A | 08-10-1982 |
| | | | IT | 1056778 B | 20-02-1982 |
| | | | JP | 51112228 A | 04-10-1976 |
| | | | NL | 7602241 A | 07-09-1976 |
| | | | SE | 405193 B | 20-11-1978 |
| | | | SE | 7602578 A | 06-09-1976 |
| EP 1575262 | A1 | 14-09-2005 | AU | 2002368463 A1 | 09-07-2004 |
| | | | WO | 2004056084 A1 | 01-07-2004 |
| | | | JP | 4012201 B2 | 21-11-2007 |
| | | | US | 2005286778 A1 | 29-12-2005 |
| US 2005212933 | A1 | 29-09-2005 | JP | 2005278025 A | 06-10-2005 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 3971065 A